# EUROPEAN PATENT SPECIFICATION

(11) **EP 4 297 961 B1**
(45) Date of publication and mention of the grant of the patent: **29.04.2026**
(21) Application number: 22707714.6
(22) Date of filing: 23.02.2022
(51) Int. Cl.: B29C 70/34, B29C 70/22, A45C 5/02, B27N 3/04, B27N 3/18, B27N 3/24, B27N 5/00

(54) **PART OF A LUGGAGE SYSTEM COMPRISING A NATURAL FIBER MATERIAL AND METHOD FOR ITS MANUFACTURE AND REPAIR**
TEIL EINES GEPÄCKSYSTEMS MIT NATURFASERMATERIAL UND VERFAHREN ZU DESSEN HERSTELLUNG UND REPARATUR
PARTIE D'UN SYSTÈME DE BAGAGE COMPRENANT UN MATÉRIAU À BASE DE FIBRES NATURELLES ET SON PROCÉDÉ DE FABRICATION ET DE RÉPARATION

(30) Priority: 26.02.2021 DE 102021201835
(43) Date of publication of application: 03.01.2024
(73) Proprietor: HS New Travel GmbH, 10785 Berlin (DE)
(72) Inventor: ROOSEN, Jan Hendrik, 10785 Berlin (DE); BLEAKNEY, Everett, 10785 Berlin (DE); RUSS, Jörg, 91489 Wilhelmsdorf (DE); WIESNER, Michael, 91489 Wilhelmsdorf (DE)
(74) Representative: Bardehle Pagenberg Partnerschaft mbB Patentanwälte Rechtsanwälte
(86) International application number: PCT/EP2022/054556
(87) International publication number: WO 2022/180115

(56) References cited:
- EP-A1- 3 585 607
- WO-A1-2021/009581
- US-A1- 2017 313 002

## Description

### 1. Technical field

The present invention relates to a luggage system or a part of a luggage system, in particular a shell of a hard-shell case or trolley or a part of such a shell, comprising a natural fiber material. The present invention further relates to a method for the manufacture and a method for the repair of such a luggage system or part of a luggage system.

### 2. Prior art

Material fibers of synthetics, carbon or e-glass have been utilized in the rolling luggage industry for decades, both in woven and non-woven patterns suspended in a suitable matrix material, due to their ability to add strength in a number of areas such as the tensile-, tear- and torsional stability of the luggage. While these composite materials can achieve high levels of mechanical performance, they can easily be weakened or broken by poor processing and environmental conditions.

Regardless of cause, should a failure in such a composite shell occur, there is seldom a chance for repair to the shell, rather only replacement. The individual materials that comprise the composite material in the broken shell would need to be separated individually to be recycled via heat or mechanical- or chemical processes in state-of-the-art recycling facilities. Globally, composites are almost never recycled due to the difficulty of separating the contained materials, the energy intensity to perform the separation and the lack of economic incentive to do so.

As the materials comprised in the known composite materials are inorganic and are potentially or already known to be highly damaging to the environment in their extraction and processing, and given that their end of life is almost exclusively landfill, the life cycle assessment for the world's strongest composite materials in the luggage industry is surprisingly brief and with negative impacts on the environment both on the front and back end of their life.

For most consumers, however, ecological sustainability is a key attribute they would like to see advanced in most any product. Often it is expressed that sustainability and durability are opposing ideas at any reasonable cost and that one must be sacrificed for the others, which always leaves the customer with a compromise.

Some consideration to the use of natural fibers was given in document US 3,383,272 A describing a molded rigid product having contoured and non-contoured portions, said product being derived from a resin impregnated fibrous mass comprising a plurality of fibers, in particular jute fibers, that are formed into a porous, interlocked mass by suitable needling or gigging means.

More recently, luggage using flax fibers and bioplastics has been offered by PRO-JECTKIN ApS, Denmark (website: https://projectkin.com/).

EP 3 585 607 B1 discloses that fiber reinforced composites are made by infusing a mass of reinforcing fibers with a resin composition (11). A thin sheet (6) of nano-sized monofilaments (7) is applied on at least one major surface of a fiber mass. The resin composition (11) is subsequently hardened to form the composite. This method produces a composite having a very smooth surface. Printout of the reinforcing fiber is greatly reduced without the need to mask it through the application of thick coatings or additional layers of material.

However, there is still a need for luggage that improves on the environmental impact of convention luggage systems while maintaining the stability and strength of known constructions and composite materials.

This problem is addressed and at least partially solved by the different aspects of the present invention.

### 3. Summary of the invention

A first aspect of the invention relates to a part of a luggage system, in particular a shell or part of a shell of a hard-shell case or trolley.

In an embodiment, the part of a luggage system comprises a fiber-reinforced material, as defined in claim 1.

Throughout most of this document, reference will simply be made to a "part of the luggage system" (or even shorter "luggage part") for simplicity and conciseness, but the option of an entire luggage system like a complete hard-shell case or a complete trolley is always also implied, unless stated otherwise.

Moreover, besides a shell or part of a shell of a hard-shell case or trolley already mentioned, the disclosed fiber-reinforced material may also be applied to other kinds of luggage in which a fiber-reinforced material can be beneficially used, for example, as a reinforcement in certain areas of a bag or travel case otherwise made from a different material, e.g., at the edges or corners of the bag or case, or in the areas where wheels are attached.

In the context of this document, a natural fiber material, also sometimes called an organic fiber material, is a fiber material originating from a plant or other object of nature, in contrast to the synthetic or chemistry-based materials mentioned in the beginning and conventionally used in the art. Specific examples of such materials will be discussed below.

A set of unidirectional fibers is a set of fibers that are arranged (e.g., by intentional arrangement during manufacture) along a certain preferred direction, in contrast to fibers that are randomly or chaotically arranged, either by themselves or after having been processed into such an arrangement, e.g., by needling or gigging. Of course, in an actual product such unidirectional fibers will generally also not all be arranged perfectly parallel to said preferred direction, in the strict mathematical sense of the word "parallel". A certain deviation that is, for example, unavoidable due to the manufacturing process and/or due to the natural irregularities in the shape of the fibers is allowed for, but a discernable "directivity" is provided to the arrangement of the fibers. The understanding of the term "unidirectional" as it is used in the context of this document can therefore be in line with the natural understanding the person skilled in the pertinent art will have of the term.

Besides the set or sets of unidirectional natural fibers, the natural fiber material may also comprise additional natural fibers in any sort of arrangement, but in a preferred option the natural fiber material is completely comprised of the one or more sets of unidirectional natural fibers.

The unidirectional fibers can be partially or fully embedded within the matrix material (suitable matrix materials and their respective properties will be discussed in the following), and/or they can be partially or fully impregnated with the matrix material. Being embedded within the matrix material can be understood in the sense that the fibers are suspended or "float" within a bed of matrix material, i.e., the fibers may be interspersed by the matrix material in the spaces between the individual fibers. Being impregnated with the matrix material can be understood in the sense that the matrix material is "soaked up" by the fibers, e.g., such that the fibers become "tacky" and stick to one another without a noticeable amount of matrix material being present between the individual fibers. Of course, graduations between the two options are also possible, i.e., the fibers may both be (partially) embedded within the material matrix and be (partially) impregnated with the matrix material.

Besides the natural fiber material comprising the at least one set of unidirectional fibers embedded in and/or impregnated with the matrix material, the fiber-reinforced material may also include additional materials or components, for example a (non-organic) textile fabric to provide further reinforcement in certain places that are subject to particularly high loads and forces. In a preferable scenario, however, the fiber-reinforced material does not contain any fibrous material besides the natural fiber material or natural fiber materials.

The part of a luggage system may be exclusively made from the fiber-reinforced material. However, the part may also include further components that are made of, or comprise, a different material or materials. For example, the part of a luggage system may be a (front and/or back) shell of a hard-shell case or travel- or cabin trolley which is generally made from a front shell and a back shell, and the shell main body may be made from the disclosed fiber-reinforced material. In addition, the shell may, for example, include a hinge-system, a zipper or closure-system, a handle bar or grip-structure, one or more wheels, and so forth, which may or may not comprise or be comprised of the disclosed fiber-reinforced material.

The natural or organic fiber materials that may be used in the context of the present invention (some examples of which will be discussed in more detail below) may require nearly no herbicides and pesticides, very little water to grow and very little energy to harvest and process, often with little or no harmful chemicals involved. Moreover, particularly when combined with a matrix material that is made of or comprises a bio-based and biodegradable compound, it may be possible that extracting the fibers from the matrix material at the end of life of the luggage system could be achieved through common composting methods which rely on water, ambient temperature, pressure and UV light to degrade, and thus be either be recycled or act as further soil nutrition.

Moreover, in non-directional composite materials (e.g., fiber-reinforced materials having randomly arranged fibers), as the reinforcing fibers have no specific orientation, energy upon impact is not distributed evenly through the material and thus should a failure occur any fracture in the material can propagate in any and multiple directions. This is particularly dangerous for luggage systems like trolleys, because there are generally no designated impact-absorption zones (in other words, an impact may occur on any part of the luggage and from any direction) and there is hence a high risk of damage or even destruction beyond the point of potential repair of the trolley if such non-oriented composite materials are used. Also, in such non-oriented materials, adding mass to certain regions (i.e., additional layers in the corners of the trolley) is almost always the method used to increase the strength of the material, which is at odds with the principles of sustainability and the ever increased restrictions on weight limits of luggage.

In contrast, the set of unidirectional fibers used by the present invention will displace the impact energy in a more predictable and controllable manner, as each fiber will channel energy in a specific orientation and in the path of least resistance. Besides the option of orienting the fibers such that energy is more efficiently dispersed from regions where impact can at least be considered more likely to occur (e.g., at the edges or corners), the unidirectional fibers can hence also limit the amount of damage should a fracture occur after all, for example, by directing the fracture in a less critical direction with regard to the overall stability of the luggage/trolley. Compared to the use of randomly arranged fibers, the unidirectional fibers used in the disclosed material can therefore provide a "stability frame" to the material, which increases its overall stability and lifetime.

Another benefit of using the natural fibers in a unidirectional arrangement is that natural fibers are often very strong in longitudinal direction, but may fray or split or otherwise disintegrate if pulled on or loaded in a sideward direction (in contrast to synthetic fibers where this problem may not exist or only to a smaller degree). Also in this regard, using natural fibers in a suitably chosen unidirectional arrangement (e.g., such that the fibers are predominantly loaded in their longitudinal direction) can therefore help to increase the lifetime of the product compared to using natural fibers in a completely random arrangement, where fraying and splitting of the individual fibers may occur to a larger degree.

It is mentioned in this regard that the part of a luggage system may also comprise two or more regions in which fiber-reinforced materials with a differently oriented set or sets of unidirectional natural fibers are used, to take into account the specific geometry of these regions and/or the kind of impact that is likely to occur in these regions, for example. The material composition of the natural fibers and/or the matrix material, or other physical- and mechanical properties thereof, may also change between such regions.

To summarize, the use of the disclosed fiber-reinforced material comprising the natural fiber material with the at least one set of unidirectional fibers embedded in and/or impregnated with the matrix material combines the beneficial mechanical properties of such an oriented material, particularly for the construction of luggage systems like hard-shell cases or trolleys, with the environmental friendliness of natural base materials.

Further options and modification pertaining to the first aspect of the present invention will now be indicated and discussed, and these further options and modifications may also be combined with one another to obtain the desired material- and performance characteristics of the part of the luggage system, even if not every single possible permutation among the disclosed options is explicitly spelled out in the following. Individual features of sub-features may also be omitted if deemed not necessary to obtain the desired goal.

The natural fiber material comprise n sets of unidirectional (natural) fibers which are embedded in and/or impregnated with the matrix material, wherein n is an integer number greater than 1, and wherein the n sets of unidirectional fibers are mutually non-parallel.

In other words, the natural fibers may provide a multi-axial material, wherein n is the number of axes. By increasing the number n of axes, the isotropy of the material properties can be increased, possibly at the cost of higher manufacturing expenses and complexity, such that there will generally be a compromise between stability and isotropy on the one hand, and manufacturing costs and complexity but also weight of the product on the other hand.

Also in the context of more than one set of unidirectional fibers, it is possible that the part of the luggage system comprises several regions (i.e., two or more) in which different embodiments of the disclosed material are used. To give one specific example, a shell of a hard-shell case or trolley may comprise on its main face a fiber-reinforced material comprising a natural fiber material with two sets (i.e., n = 2) of unidirectional (natural) fibers which are embedded in and/or impregnated with the matrix material. At the edges and/or corners and/or where the wheels are attached, the shell may comprise a fiber-reinforced material comprising a natural fiber material with three or more sets (i.e., n ≥ 3) of unidirectional (natural) fibers which are embedded in and/or impregnated with the matrix material, to provide a high degree of stability to these specific regions. The material composition and/or mechanical properties of the natural fibers and/or the matrix material may also change between the different regions, to further control the properties of the luggage part.

In particular, each set of unidirectional fibers may comprise a plurality of fiber bundles and/or fibrous yarns that are arranged along a respective axis.

In other words, the fibers can be prearranged or spun into bundles or yarns that are then oriented and incorporated into the fiber-reinforced material to from the part of the luggage. This can not only facilitate and simplify manufacture, it may also increase the "directivity" of the fiber-reinforced material and hence lend particular strength to the directions defined by the material axis or axes.

As mentioned, there may be two sets of unidirectional (natural) fibers used, i.e., n = 2, meaning that the natural fiber material is provided as a bi-axial fabric or material.

A bi-axial material is the simplest case of a multi-axial material beyond the case of having only one set of unidirectional fibers that are oriented along one single axis. It may therefore be relatively easily manufactured but already provide better isotropy and general stability than a single-axis material. In particular in view of the fact that natural fibers may be more stable in longitudinal direction (i.e., along the extension of the fiber) than in lateral/sideward direction, already adding one more axis to the material may significantly increase the stability and longevity of the part of the luggage system. A biaxial material therefore provides for a lightweight yet sufficiently stable and easily manufactured fiber-reinforced material for luggage construction on the basis of natural or organic fibers.

The two axes of the bi-axial fabric may intersect at an oblique angle (i.e., an angle not equal to 90°).

Generally, an intersection-angle of the two axes equal to 90° is of course also possible. However, an oblique intersection angle (i.e., ≠ 90°) may further provide for the opportunity to combine a high general stability of the luggage part, due to the usage of more than one axis, with the provision of a further degree of "directivity" or anisotropy. Due to the fact that the two axes do not intersect at 90°, there will be an acute angle (i.e., an angle < 90°) formed between them, as well as a complementary obtuse angle (i.e., an angle > 90°). For example, the direction defined by the angle dissector of the acute angle will be "closer" to the two axes than the angle dissector of the obtuse angle, such that along the angle dissector of the acute angle a larger stiffness/stability can be obtained compared to the perpendicular direction, i.e. along the direction angle dissector of the obtuse angle. The skilled person recognizes how this concept can be used to influence the physical and mechanical properties of the luggage part not only along the two material axes themselves, but also in the angle segments between them.

Another option is that there are three sets of unidirectional (natural) fibers, i.e., n = 3, meaning that the natural fiber material is provided as a tri-axial fabric or material.

One benefit of using three axes (or an even larger number of axes, e.g., *n*= 4, 5, 6, ... , although further increasing the number of axes beyond *n* = 3 may become too prohibitive from a constructional and manufacturing point of view) is that any impact energy leading to an initial fracture of the luggage part in some position is quickly met with barriers to that energy at the nearest intersection point or points of the different sets of fibers, and thus redirected into three directions. This redirection of energy will continue and divide again until it exists the system or dissipates within the material. In this manner, large fractures can be avoided, which facilitates repair instead of discarding. In addition, the overall stability and isotropy of the material is increased compared to using one or two axes only.

Also in this case, at least two of the axes of the tri-axial fabric may intersect at an angle different from 60°.

In other words, also for more than two axes, the axes (or at least some of them) may intersect at an "irregular" angle, wherein the "regular" angle for n axes to intersect may be considered to be 360° divided by n (wherein the intersection angle may be taken as the acute angle formed by two intersecting oblique axes, not the complementary obtuse angle).

The fibers contained in the natural fiber material may be continuous.

Continuous fibers, e.g., fibers that have not been torn or cut or otherwise shortened during or after being extracted from their natural source, maintain a very high degree of (tear-) strength in their longitudinal direction (along the extension of the fiber), which translates into a corresponding high stability of the luggage part in which they are used. Also, by using continuous fibers the manufacturing process can be facilitated or even made possible in the first place, in particular if the natural fibers are processed to form a woven fabric. However, also for a layered fabric the use of continuous fibers can be beneficial and increase the general tear strength of the finished product along the fiber direction or directions. Irrespective of the structure of the natural fiber material (woven or layered), the use of continuous fibers can increase the luggage part's resistance against uncontrolled damage propagation by channeling impact forces along the extension of the fibers.

The addition of discontinuous and/or particulate (natural and/or synthetic) fibers to the fiber-reinforced material is generally also possible, of course. However, the predominant or exclusive use of continuous natural fibers is beneficial in the sense that it can enhance the "directivity" of the fiber-reinforced material and limit uncontrollable damage propagation which has already been mentioned a number of times above, and from a sustainability point of perspective.

The natural fiber material is provided as a layered fabric.

Providing the natural fiber material as a layered structure may reduce the manufacturing effort compared, for example, to utilizing a woven structure as discussed below, potentially at the cost of a slightly lower stability of the material. For example, manufacture could be performed via wet layup by layering one or more sheets or layers of oriented fibrous material within a bed of liquid resin, which will form the matrix material after curing, and then compression molding this pre-form into the desired shape, for example under the influence of pressure and by curing the resin by heat, ultraviolet light or a rapid change in humidity pending the required resin setting method. Or manufacture could proceed via impregnated sheets or layers of fibrous material that are suspended in or on an epoxy resin, a thermoplastic resin or a film, and then be thermoformed into the desired shape.

Each layer further comprises several plies of parallel-oriented, unidirectional fibers.

Stacking up the layers by several plies of parallel-oriented, unidirectional fibers can on the one hand lead to an easier manufacture, and on the other hand allow exerting a more fine-tuned control on the thickness, density, tear-strength, and so forth, of each individual layer, in particular if the number of plies is individually controlled for each layer.

The natural fiber material of the present invention may comprise fibers of one or more of the following materials or plant parts: leaf fibers, bast fibers, or stalk fibers.

To name a number of specific examples of these different categories, leaf fibers that may be used with the present invention include fibers of abaca, piña and/or palm, bast fibers that may be used include fibers of hemp, flax, ramie, kenaf and/or jute, and stalk fibers that may be used include fibers of bamboo and/or straw.

Even more specifically, some examples of natural fiber materials that may be used within the present invention include: a tri-axial natural fiber material using flax and/or bamboo fibers, or a bi-axial natural fiber material using basalt and/or bamboo fibers. These materials can be beneficially used with the present invention as they provide a good combination of commercial availability, structural and mechanical stability, and a small environmental footprint.

A material composition of the natural fiber material can further vary within a given set of unidirectional fibers and/or between at least two sets of unidirectional fibers. Alternatively, or additionally, one or more physical properties, in particular a gauge of the fibers and/or a linear mass density of the fibers, can vary within a given set of unidirectional fibers and/or between at least two sets of unidirectional fibers.

For example, flax fiber can be a split bast and be split into increasingly smaller widths or gauges, or it can used without dividing the bast at all. The use of flax can be beneficial from the point of view that flax is easily commercially available.

The same can be said for bamboo, which is a stalk fiber, and which has an even greater capacity in maximum fiber size. The use of bamboo may particularly be considered as a fiber material for localized reinforcement, due to its higher density, but also as a primary fiber for larger luggage parts or entire cases that require more impact strength.

These options hence allow to further influence the physical and mechanical properties of the luggage part locally and in a controlled manner, beyond the orientation and number of axes (i.e., the number of sets of unidirectional fibers) that are used for natural fiber material of the fiber-reinforced material of the present invention.

Preferably, the matrix material is biodegradable and/or comprises recycled material. Particularly preferred is a biodegradable material which provides high impact capabilities to the finished luggage part.

One possibility in this regard is the use of a thermoplastic film of polylactic acid (PLA) as matrix material or part thereof.

As mentioned above, using a biodegradable matrix material (for example, a matrix material based on or consisting of the just-mentioned PLA) in combination with a reinforcement structure based on a natural fiber material may allow the entire luggage part, or at least large portions thereof, to be biodegradable as well, and hence very appealing form a sustainability point of view. Alternatively, even though less preferred from a point of view of sustainability, recycled material may be used (which is generally still better than using brand-new materials), which has the benefit of having a larger class of materials to choose from, because biodegradable matrix materials/plastics are not yet developed to the same degree and available in the same number and diversity as recyclable plastics are.

Bio-based polyethylene (PE), polypropylene (PP), polyamide-6 (PA6), polyamide-11 (PA11), polyamide-12 (PA12) and/or polycarbonate (PC) may also be used as matrix material or part thereof, even though these materials are not (fully) biodegradable, but may at least be more environmentally friendly when it comes to their sourcing and production (compared to plastics based in crude oil, for example).

Generally, however, the matrix material used in an inventive part of a luggage system may comprise one or more of the following materials: an amorphic, crystalline or semicrystalline thermoset resin; an amorphic, crystalline or semicrystalline thermoplastic resin; or a film of any of the beforementioned thermoset of thermoplastic materials or combinations thereof.

All of these materials have their benefits and drawbacks, which are generally known to the person skilled in the art, and may therefore be used and selected depending on the desired properties of the luggage part they are used in. For example, thermoset resins may be less preferred from a manufacturing point of view, because they require relatively long cycle times for curing, but may provide beneficial properties in the finished component like high impact capabilities, for example.

Irrespective of the base material(s) the natural fibers are of and of the chemical composition of the matrix material, the inventive part of a luggage system, can be free from aluminum.

Aluminum has long been used - and still is - in large amounts in all kinds of luggage on the market, in the form of entire luggage shells or as reinforcement and protection elements at the corners, for handle bar systems, and so on, while from a sustainability point of view it is notoriously undesirable. The present invention provides an alternative to using this problematic material by providing the discussed fiber-reinforced material based on the use of a natural fiber material that can still provide a comparable stability and longevity to the products it is used in, but at a much smaller ecological footprint.

A second aspect of the invention relates to a method for the manufacture of a luggage system or part of a luggage system as defined in claim 10.

The skilled person understands that the embodiments, features and options discussed above with regard to a part of a luggage system according to the first aspect of the present invention generally translate to corresponding features regarding the manufacture of such a part. The embodiments, features and options discussed above thus also apply (as far as technically and physically applicable, of course) to the second aspect of the present invention discussed now, namely the manufacture of such a part, and are therefore not all repeated again. Instead, only a few specific embodiments and options as well as advantages of the second aspect are mentioned in some more detail in the following, and reference is made to the detailed explanations given above in the context of the first aspect of the invention in all other regards.

In an embodiment, the manufacturing method comprises the steps as defined in claim 10.

Preferably, the curing occurs within the mold, and preferably while the mold pressure is at least partially or fully maintained. Conceivably, however, the sequence of method steps may also be changed and the mold may be opened and the part be removed before and/or during the curing process. Or the mold pressure may be significantly reduced during curing. Or the mold be opened but the part still be left inside the mold for curing.

Moreover, the sub-step of heating the pre-form before transferring it to the mold may also be omitted, for example, if the pre-form does not need to be heated to be made or be kept malleable (for example, if the matrix material is still "wet"), and the heating may also, at least partially, be performed within the mold and/or during closing of the mold.

The part thus manufactured may be a shell or part of a shell of a hard-case shell or trolley, as already indicated a number of time, but it may also be the main body of part of the main body of a different kind of luggage. It may also be or comprise part of a wheel assembly, a handle bar system, and interior structure, and so forth of a piece of luggage and the dimensions and geometry of the mold will correspond to the nature of the part in a manner the skilled person easily perceives.

The curing process will depend on the composition of the matrix material that is used in a given process and will not be further discussed here.

For the case that the natural fiber material is intended as a layered structure, providing the pre-form may comprise the steps of providing one or more plies of unidirectional natural fibers, and layering up the plies to form a stack of one or more layers of unidirectional fibers, the unidirectional fibers of each layer being arranged along a respective axis, wherein uncured matrix material is applied to the plies of unidirectional fibers and/or to the layered stack and is allowed to be at least partially absorbed by the natural fibers to form the pre-form.

That is, the uncured matrix material can be provided before, during or after the layering of the stack. If provided during the layering, it may be continuously added to the growing stack, or after a predefined number of plies has been added or after some other pre-defined time interval, for example.

It is once again mentioned that the layers of the stack may all have the same number of plies, or the number of plies (i.e., sub-layers) may vary between two of more or the layers.

The plies may already be pre-oriented prior to being added to the stack, for example when being stored in a suitable storage container or the like, or they may be brought into the correct orientation directly when being applied to the stack.

Providing the pre-form may further comprise fusing the locations where fibers of the different plies or layers cross or overlap within the stack, for example under the application of: pressure, heat, UV light and/or ultrasonic waves.

This may not only facilitate handling of the pre-form and the subsequent steps of the manufacturing process, it may also increase the overall stability and strength of the manufactured part.

For the case that the natural fiber material is intended as a woven structure, providing the pre-form may comprise the steps of providing at least one natural fiber material in the form of a woven multi-axial fabric, providing at least one uncured matrix material in the form of a ribbon, sheet or film, and laminating the natural fiber material with the uncured matrix material, preferably under the application of: heat and/or pressure, and allowing the natural fiber material to a least partially absorb the uncured matrix material to form the pre-form.

In either case (i.e., for a layered structure or a woven structure), the invention allows for an ecologically friendly manufacturing process, basically from agriculture to final processing, for example by one of the following exemplary processes:
(a) Bast fibers are harvested either as a primary or secondary agriculture product. If secondary, the primary product (e.g., linseed, bananas, cannabis) is separated from the harvest stock. Pending plant type and climate, unwanted stock material is then removed by a number of different processes and is then dried.
(b) The pre-form could be layered with one or more fiber layers and then liquid epoxy could be applied through all layers of the pre-form to impregnate the fibers and act as a bonding agent that would behave similar to a thermoplastic resin. The wet layup matrix of the fiber layers and epoxy could be applied directly onto a three-dimensional mold, or be prepared in a flat condition and then moved onto a three-dimensional mold. The three-dimensional mold would usually have at least two parts to its cavity, commonly a male one and a female one defining a molding cavity between them. Heat and pressure would then be applied to the parts of the cavity to thermoset the epoxy in the desired shape.

Additionally, it would also be conceivable to impregnate the fibers with a resin/epoxy and then orient the fibers (e.g., similar to that of a weaving process), and then fuse all locations where the impregnated fibers overlap via heat and pressure, or via pressure and frequency similar to ultrasonic welding. This pre-form could then be thermoformed in either a wet or a dry process.
(c) After either molding process, the excess materials could be cut away, and further holes could be cut into the formed part to mount any number of other components and fasteners both internally and externally in the final assembly.

A third aspect of the invention relates to a method for the repair of a luggage system or part of a luggage system according to the first aspect of the invention that has been damaged.

Also for this third aspect, the skilled person understands that the embodiments, features and options discussed above with regard to a part of a luggage system according to the first aspect of the present invention and/or a manufacturing method according to the second aspect of the present invention generally translate to corresponding features regarding the repair of such a part. Therefore, only a few specific embodiments and options as well as advantages of the third aspect of the invention are briefly mentioned below, and reference is made to the detailed explanations given above in the context of the first and/or second aspect of the invention in all other regards.

In an embodiment, the method for repair comprises the steps of: adding uncured matrix material to the damaged area of the part; allowing the natural fiber material in the damaged area to absorb the added uncured matrix material at least partially; applying pressure to the damaged area (e.g., to further facilitate absorption of the uncured matrix material and/or to re-shape the damaged area into the desired shape); and curing the added uncured matrix material or allowing it to cure, preferably under the application of: heat, UV light and/or ultrasonic waves, and/or under a change in: temperature and/or humidity.

In another embodiment, the method for repair comprises the steps of: adding uncured matrix material to the damaged area of the part; allowing the natural fiber material in the damaged area to absorb the added uncured matrix material at least partially; and curing the added uncured matrix material or allowing it to cure, preferably under the application of: pressure, heat, UV light and/or ultrasonic waves, and/or under a change in: temperature and/or humidity.

The two embodiments just mentioned basically differ in the way pressure is used during the process: In the first embodiment, the damaged area is subjected to pressure prior to the curing process, while in the second embodiment pressure may or may not be applied during the curing process. Which option is more suitable, and whether the application of pressure is necessary at all, may dependent on the size and shape of the part and of the damaged area, as well as the composition of the matrix material and the nature of the curing process.

In conventional fiber-reinforced materials based in mineral or synthetic materials, the fiber itself is typically relatively hydrophobic and cannot absorb resin into the fiber at nearly the capacity of a natural or organic fiber with its cellular structure. Also, mineral fibers are comparatively brittle. In the event that a piece of luggage containing such a material fractures, it is uncommon for the part to be able to be repaired, as patching such an area would require material to be added on the top and bottom of the affected area with the original substrate residing between. To add strength, holes must furthermore be added to the composite which have a very high risk of becoming a new weak point that will not withstand a repeated impact.

The use of natural fibers as prescribed by the present invention overcomes this problem, because natural fibers are typically hydroscopic, and can thus absorb more resin in the areas of fracture in the repair / patching process than fibers of mineral or synthetic materials. This makes it possible to strengthen the part in repair and not weaken it. Moreover, the repair process can potentially occur many times and if the repair process is thought to be exhausted or is not economically feasible, the luggage part can be completely or at least predominantly compostable or biodegradable, as already discussed above.

In this context, components such as fabrics, handles and wheels comprising the disclosed fiber-reinforced material with the natural fiber material could, for example, be repurposed (e.g., after having been worn out) for repairs of trolley shells made from such material.

### 4. Brief description of the figures

Possible embodiments of the present invention are described in more detail, with reference to the following figures:
- **Figs. 1a-c:**: Examples of a fiber-reinforced material comprising a natural fiber material and a matrix material that may be used in an inventive part of a luggage system;
- **Fig. 2:**: Example of an inventive method for the manufacture of an inventive part of a luggage system;
- **Fig. 3:**: Further example of an inventive method for the manufacture of an inventive part of a luggage system;
- **Fig. 4:**: Example of an inventive part of a luggage system with a bi-axial, woven natural fiber material; and
- **Figs. 5a-h:**: Example of an inventive luggage system in the form of a travel- or cabin trolley.

### 5. Detailed description of possible embodiments

Possible embodiments of the different aspects of the present invention are described below, predominately with respect to travel- or cabin trolleys. It is, however, emphasized once again that the different aspects of the present invention may also be practiced in different kinds of luggage systems and are not limited to the specific embodiments set forth below.

Reference is further made to the fact that in the following only individual embodiments of the invention can be described in more detail. The skilled person will understand, however, that the features, options and possible modifications described with reference to these specific embodiments may also be further modified and/or combined with one another in a different manner or in different sub-combinations, without departing from the scope of the present invention. In order to avoid redundancies, reference is therefore made to the explanations in the preceding sections, which also apply to the following detailed description.

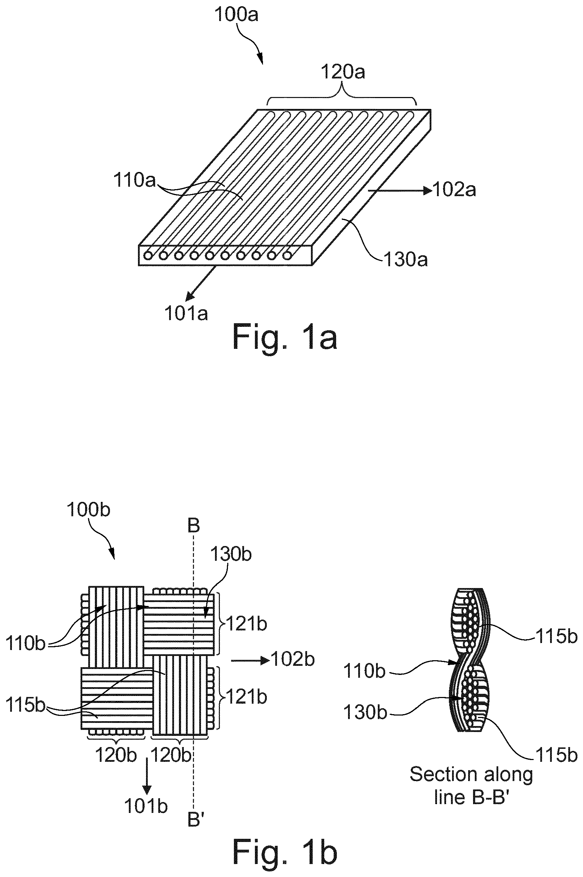

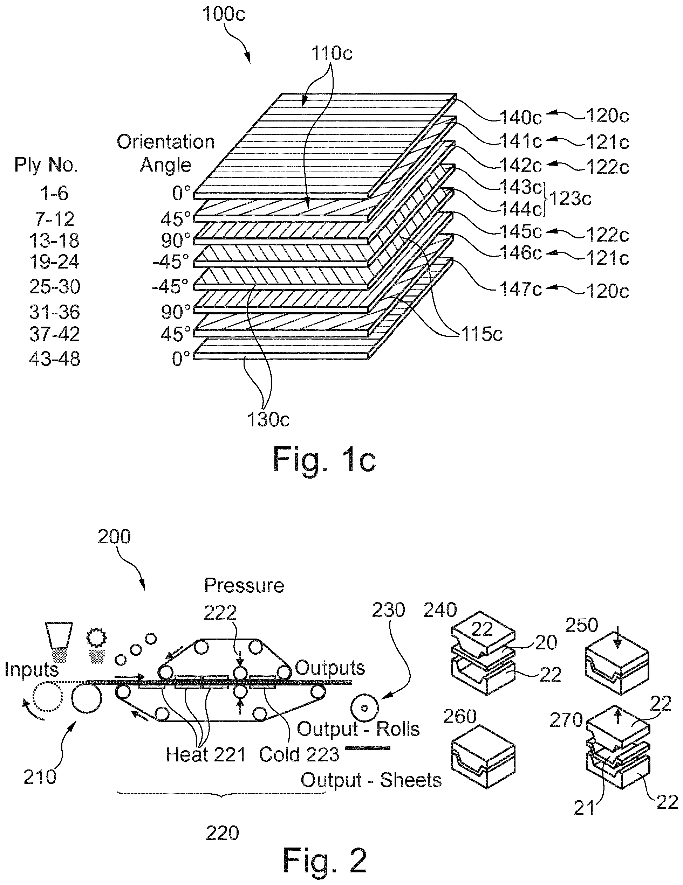

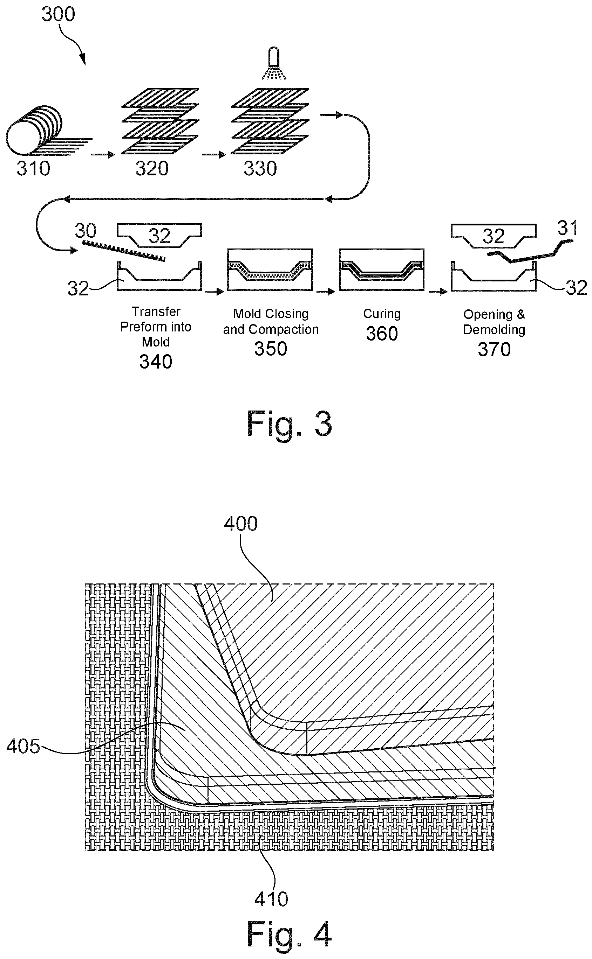

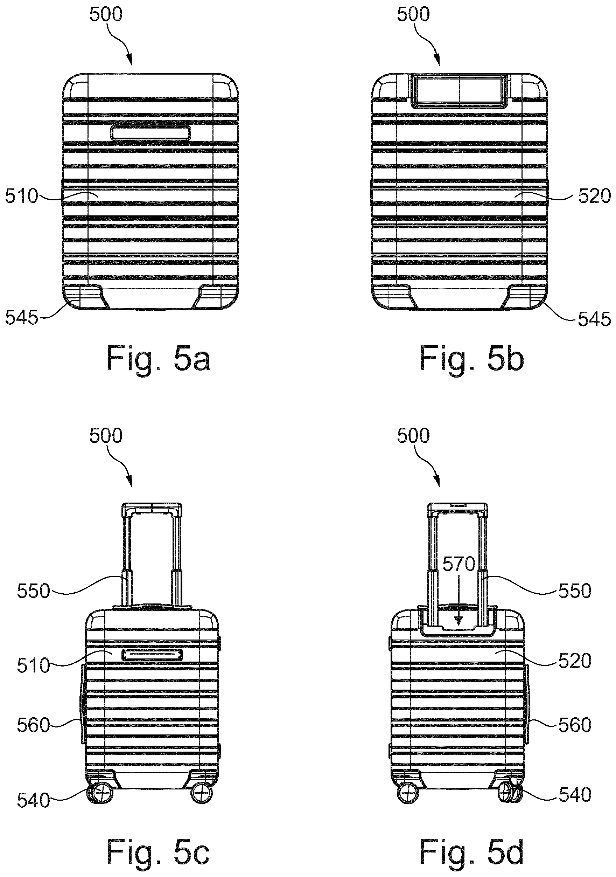

**Figs.** 1a and 1c show examples of fiber-reinforced materials **100a, 100b** and **100c** comprising a natural fiber material with at least one set of unidirectional fibers embedded in and/or impregnated with a matrix material, which may be used in a part of a luggage system according to the present invention (examples of such parts are shown in **Fig. 4** and in **Figs. 5a****-h**).

**Fig. 1a** shows a fiber-reinforced material **100a** comprising a natural fiber material that comprises continuous natural fibers **110a.** Discontinuous and/or particulate fibers may also be added to the fiber-reinforced material **100a,** but this is not shown and further discussed here.

The continuous natural fibers **110a** can be provided as a plurality of fiber bundles / fibrous yarns. The natural fibers **110a** form a set **120a** of unidirectional fibers arranged along the longitudinal direction **101a in** **Fig. 1a****.** Also indicated in **Fig. 1a** is the transvers direction **102a,** which is perpendicular to the longitudinal direction **101a.** In the part of a luggage system made of or comprising the material **100a,** the longitudinal direction **101a** may be arranged, for example, along the direction of greatest spatial extension of the part, but this need not necessarily be the case. In other words, the designation as "longitudinal" and "transverse" directions are predominantly used to facilitate the understanding of the following explanations and for definiteness, but they do not necessarily mandate a specific arrangement of the material **100a** within the part of a luggage system in which it is used. For example, the longitudinal direction **101a** may also be arranged obliquely or diagonally with respect to the edges of a shell of a hard-shell case or trolley in which the material **100a** is used (e.g., in one of the shells **510, 520** of the trolley **500** discussed further below).

The fibers **110a** of the set **120a** are embedded within a matrix material **130a.** The fibers **110a** may also have "soaked up" the matrix material **130a** and hence be impregnated with the matrix material **130a.** Moreover, while in the situation shown in **Fig. 1a** the fibers **110a** are completely embedded in the matrix material **130a,** i.e., fully contained therein (apart from maybe their beginnings and ends), this need not necessarily be the case in all situations. In other words, the fibers **110a** can also be only partially embedded within the matrix material **130a,** or reside "on top" of the matrix material **130a,** or only contain matrix material **130a** within their inside, i.e., only be impregnated with the matrix material **130a** but not be surrounded by or embedded in any matrix material **130a** on their outsides. These statements also apply to fiber-reinforced materials containing more than one set (i.e., *n* sets with *n* > 1) of unidirectional fibers, e.g., the materials **100b** and **100c** discussed in the following, even if this is not explicitly repeated again every single time.

The fibers **110a** of the natural fiber material may, for example, comprise one or more of the following materials: leaf fibers, bast fibers, or stalk fibers.

For example, the use of flax, which is a bast fiber, for the fibers **110a** (or for any of the natural fibers discussed herein) can be beneficial from the point of view that flax is easily commercially available. The use of bamboo, which is a stalk fiber, may also be considered, particularly as a fiber material for localized reinforcement, due to its higher density, but also as a primary fiber for larger luggage parts or entire cases that require more impact strength.

The matrix material **130a** may comprise or be comprised of one or more of the following materials: an amorphic, crystalline or semicrystalline thermoset resin; an amorphic, crystalline or semicrystalline thermoplastic resin; or a film of any of the beforementioned thermoset of thermoplastic materials or combinations thereof. Preferably, the matrix material **130a** is biodegradable and/or comprises recycled material.

One specific option is the use of PLA as the matrix material **130a,** or at least base the matrix material **130a** thereon, due to its known biodegradability. Generally, biodegradable and impact-resistant, bio-based thermoplastics or resins are well suited to the present invention.

As alternatives, partially or completely bio-based PE, PP, PA6, PA11, PA12 and PC materials can also be considered, even though these materials may not be (fully) biodegradable, but still be more environmentally friendly than conventional plastics based on crude oil, for example.

**Fig. 1b** shows, not according to the invention, on the left-hand side, another fiber-reinforced material **100b.** On the right-hand side **of** **Fig. 1b****,** a cross-section along the line **B-B'** through the material **100b** is shown.

The material **100b** comprises a natural fiber material that comprises continuous natural fibers **110b.** Discontinuous and/or particulate fibers may again be added to the fiber-reinforced material **100b,** but this is again not shown or further discussed here. The continuous natural fibers **110b** are provided in the form of fibrous yarns **115b** which are woven into a bi-axial fabric and are arranged either along the longitudinal axis (or direction) **101b,** or along the transverse axis (or direction) **102b.** Again, this nomenclature is predominantly used for definiteness and not necessarily limitation, see the corresponding explanations about the directions **101a** and **102a** with regard to **Fig. 1a** above. The longitudinal direction **101b** could, for example, be the warp direction and the transvers direction **102b** could be the weft direction, or vice versa, in a weaving process used to create the woven fabric from the fibrous yarns **115b.**

In the material **100b** shown in **Fig. 1b****,** there are thus two sets **120b** and **121b** of unidirectional fibers, the set **120b** being formed of the fibrous yarns **115b** woven along the longitudinal direction **101b,** and the set **121b** being formed of the fibrous yarns **115b** woven along the transverse direction **102b.**

In the material **100b** shown in **Fig. 1b****,** the yarns of the two sets **120b** and **121b** and their respective axes intersect at an angle of (approximately) 90°. In other embodiments, however, the intersection angle can be different from 90°, i.e. the fibrous yarns **115b** and their respective axes can also be arranged at an oblique angle (≠ 90°) with respect to each other. The advantages of employing such a non-perpendicular arrangement have already discussed in section no. 3 above, to which reference is therefore made for conciseness.

The fibers **110b** in the material **100b** may have "soaked up" a matrix material **130b** and may hence be impregnated with the matrix material **130b.** The fibers **110b** may also be at least partially embedded in or surrounded by matrix material **130b.** However, the fact that the fibers **110b** are woven into a bi-axial fabric in the material **100b** shown in **Fig. 1b** already provides structural stability to their arrangement, such that the fibers **110b** in this case need not necessarily be (partially) embedded in the matrix material **130b** to fix their arrangement and to obtain the desired overall stability of the material **100b,** but impregnating the fibers **110b** with the matrix material **130b** may already be sufficient for that purpose.

A material composition of the natural fibers **110b** and/or the fibrous yarns **115b** can vary not only between the two sets **120b** and **121b,** but also within a given one of the sets **120b, 121b** of unidirectional fibers. Alternatively, or additionally, one or more physical properties, like a gauge of the fibers **110b** and/or a linear mass density of the fibers **110b** can vary within a given one of the two sets **120b, 121b** of unidirectional fibers and/or between the two sets **120b** and **121b** of unidirectional fibers. This allows to locally fine-tune the physical and mechanical properties of the material **100b** even further and beyond the "global" control exerted, for example, by the selection of the arrangement and/or weaving pattern used for the bi-axial fabric of the material **100b.**

With regard to suitable material choices for the natural fibers **110b** and/or the matrix material **130b,** reference is made to the corresponding explanations above, for conciseness (see, e.g., the statements about the fibers **110a** and the matrix material **130a** made with regard to **Fig. 1a**).

**Fig. 1c** shows another fiber-reinforced material **100c** comprising a natural fiber material that comprises continuous natural fibers **110c.** Discontinuous and/or particulate fibers may also be added to the fiber-reinforced material **100c,** but this again is not shown and further discussed here.

The continuous natural fibers **110c** can be provided as a plurality of fiber bundles / fibrous yarns **115c.** The natural fibers **110c** form n sets of unidirectional fibers, wherein for the embodiment shown in **Fig. 1c** *n* = 4, i.e., there are four sets **120c, 121c, 122c** and **123c** of unidirectional fibers here, each set being arranged along a corresponding axis or direction. The fibers of two of the four sets **120c, 121c, 122c, 123c** of unidirectional yarns are mutually non-parallel, i.e. they intersect at an angle different from 0°. The fibers **110c** are embedded in and/or impregnated with a matrix material **130c.**

A modification (not shown) of the material **100c** would have not four but three sets of unidirectional fibers **110c** (i.e., *n* = 3, a tri-axial fabric), wherein the fibers of two of the three sets of unidirectional yarns are mutually non-parallel, i.e. they intersect at an angle different from 0°. Preferably, at least two of the three sets would also intersect at an angle different from 60°, with the resultant technical advantages discussed in section no. 3 above, to which reference is therefore made in this regard.

In the material **100c,** the natural fiber material is provided as a layered fabric, wherein eight layers **140c** to **147c** are shown in the embodiment of **Fig. 1c****.** Each of the layers **140c, 141c,** ... , **147c** further comprises several plies of parallel-oriented, unidirectional fibers **110c,** which are numbered as ply no. 1 to ply no. 48 in **Fig. 1c****.** In other words, in the embodiment of **Fig. 1c****,** each of the layers **140c, 141c,** ... , **147c** comprises six plies.

In the embodiment of **Fig. 1c****,** each of the four sets **120c, 121c, 122c, 123c** of unidirectional fibers includes two of the layers **140c, 141c,** ... , **147c:**
- The first set **120c** comprises layers **140c** and **147c** with plies no. 1-6 and no. 43-48, respectively, in which the fibers are arranged at an angle of 0° with respect to the transvers direction (which is taken as the point of reference here without loss of generality).
- The second set **121c** comprises layers **141c** and **146c** with plies no. 7-12 and no. 37-42, respectively, in which the fibers are arranged at an angle of +45° with respect to the transvers direction.
- The third set **122c** comprises layers **142c** and **145c** with plies no. 13-18 and no. 31-36, respectively, in which the fibers are arranged at an angle of +90° with respect to the transvers direction.
- The fourth set **123c** comprises layers **143c** and **144c** with plies no. 19-24 and no. 25-30, respectively, in which the fibers are arranged at an angle of -45° with respect to the transvers direction.

Also here (i.e., also for the situation n > 2), a material composition of the natural fibers **110c** or fiber bundles / fibrous yarns **115c** can vary between two (or more) of the sets **120c** - **123c,** and also within a given one of the sets **120c** - **123c** of unidirectional fibers (for example, between different layers or even different plies contained in one of the sets, or even within a given ply). Alternatively, or additionally, one or more physical properties, like a gauge of the fibers **110c** and/or a linear mass density of the fibers **110c,** can vary within a given one of the sets **120c** - **123c** and/or between two (or more) of the sets **120c** - **123c** of unidirectional fibers.

**Figs. 2** and **3** show schematic illustrations of examples of an inventive method **200, 300** for the manufacture of an inventive part of a luggage system (examples of such parts are shown in **Fig. 4** and in **Figs. 5a****-h).**

The method **200** of **Fig. 2** starts, generally indicated by reference numeral **210,** by providing input materials to a production site for the preparation of a pre-form **20** for the manufacture of the luggage part **21.** The step **210** of providing the input materials can, in particular, comprise providing at least one natural fiber material in the form of a woven multi-axial fabric as well as providing at least one uncured matrix material in the form of a ribbon, sheet or film.

Further materials and components that may be provided in step **210** include, for example: adhesives, like adhesive powders, adhesives films, web adhesives; chopped glass; textile materials for further reinforcement; foils material.

The method **200** further comprises the step of laminating the natural fiber material with the uncured matrix material and allowing the natural fiber material to a least partially absorb the uncured matrix material to form the pre-form **20,** generally indicated by reference numeral **220.** In the embodiment of the method **200** shown in **Fig. 2****,** the lamination is performed under the application of heat (see reference numeral **221)** and pressure (see reference numeral **222),** and the laminated structure is subsequently cooled down (see reference numeral **223),** to stabilize the pre-form **20.**

The pre-form **20** may be stored in the form of rolls or sheets, as generally indicated at reference numeral **230.**

After providing the pre-form **20** in this manner, the method **200** further comprises the (optional) step of heating the pre-form **20** (the heating may also occur, at least partially, within the mold **22** and/or during closing of the mold **22,** or be omitted completely if not necessary to make or keep the pre-form **20** malleable) and the method **200** comprises the step of transferring the pre-form **20** to a mold **22** having dimensions that correspond to the intended shape of the part that is manufactured. This step is generally indicated at reference numeral **240.** The mold **22 is** then closed, as indicated at reference numeral **250,** preferably under the application of pressure, such that the pre-form **20** adopts the shape and geometry defined by the molding cavity, i.e. the intended shape of the part that is manufactured (at least its general shape; further post-processing steps on the demolded part may follow, which may also further alter the shape and geometry of the part). The pre-form **20** is then cured or it is allowed to cure within the mold **22** (the mold pressure may or may not be maintained during the curing), preferably under the application of: heat, UV light and/or ultrasonic waves, and/or under a change in: temperature and/or humidity, as indicated at reference numeral **260.** Finally, as indicated at reference numeral **270,** the mold **22** is opened and the molded part **21** of a luggage system is removed from the mold **22.** After the demolding step **270,** further processing may occur, as already indicted above, e.g., the part **21** may be trimmed or post-processed, holes or further component may be added, and so forth.

The method **300** illustrated in **Fig. 3** again starts, generally indicated by reference numeral **310,** by providing input materials to a production site for the preparation of a pre-form **30** for the manufacture of the luggage part **31.** The step **310** of providing the input materials this time comprises providing one or more plies of unidirectional natural fibers. The method further comprises layering up the plies to form a stack of one or more layers of unidirectional fibers, the unidirectional fibers of each layer being arranged along a respective axis. This step is generally indicated by reference numeral **320** in **Fig. 3****.** Uncured matrix material is applied to the plies of unidirectional fibers and/or to the layered stack, as generally indicated by reference numeral **330** in **Fig. 3****,** and is allowed to be at least partially absorbed by the natural fibers to form the pre-form **30.** It is emphasized that the sequence of the steps **320** and **330** may also be different to the situation shown here, i.e., the uncured matrix material may also be provided prior to or during stacking up of the layers in step **320.**

Moreover, the method **300** may also comprise the step of fusing the locations where fibers of the different plies or layers cross or overlap within the stack under the application of: pressure, heat, UV light and/or ultrasonic waves (not shown in **Fig. 3**).

From there, the method **300** may proceed in a similar manner as the method **200** described above: The pre-form **30** provided as just described may be heated (the heating may also occur, at least partially, within the mold **32** and/or during closing of the mold **32,** or be omitted completely if not necessary to make or keep the pre-form **30** malleable) and the pre-form **30** is then transferred to a mold **32** having dimensions that correspond to the intended shape of the part that is manufactured. This step is generally indicated at reference numeral **340.** The mold **32** is then closed, as indicated at reference numeral **350,** preferably under the application of pressure, such that the pre-form **30** adopts the shape and geometry defined by the molding cavity, and hence the intended shape of the part that is manufactured (again, further post-processing of the demolded part may yet occur). The pre-form **30** is then cured or it is allowed to cure within the mold **32** (again, the mold pressure may or may not be maintained during the curing), preferably under the application of: heat, UV light, and/or ultrasonic waves, and/or under a change in: temperature and/or humidity, as indicated at reference numeral **360.** Finally, as indicated at reference numeral **370,** the mold **32** is opened and the molded part **31** of a luggage system is removed from the mold **32.** After the demolding step **370,** further processing may again occur, e.g., the part **31** may be trimmed or post-processed, holes or further component may be added, and so forth.

The duration and processing parameters for the different steps of the thermoforming/molding operation, i.e., the steps **240 - 270** and **340 - 370,** can depend, for example, on the physical dimensions and press capabilities of the molding equipment and the materials used for the manufacture. For example, the duration of the mold closing step **250, 350** may depend on the press capabilities (e.g., maximal closure pressure) and the impregnation behavior of the natural fibers contained in the pre-form **20, 30,** while the duration of the curing step **260, 360** may depend on the chemical composition of the matrix material, the curing temperature within the mold, the duration and amount of pressure exerted during the preceding step **250, 350,** the mold pressure during curing, and so forth.

Some of the steps provided by the methods **200, 300** for the manufacture of a part of a luggage system may also be utilized, potentially in a slightly modified version, to provide for a method of repairing a damaged part of a luggage system.

Such a method may comprise adding uncured matrix material to the damaged area of the part and allowing the natural fiber material in the damaged area to absorb the added uncured matrix material at least partially (e.g., similar to step **330** of the method **300**).

Pressure may then be applied to the damaged area, for example within a mold (e.g., similar to step **250** of the method **200** or to step **350** of the method **300**) or in a different manner.

The repair process may further include curing the added uncured matrix material or allowing it to cure, during, after or without the application of pressure, and preferably under the application of: heat, UV light and/or ultrasonic waves, and/or under a change in: temperature and/or humidity (e.g., similar to step **260** of the method **200** or step **360** of the method **300**).

**Fig. 4** shows a part **400** of a luggage system made from a fiber-reinforced material as disclosed herein. The part may be used, for example, as a front or back insert for the main face of a shell of a hard-shell case or trolley, like the trolley **500** discussed below. The fiber-reinforced material is made from a natural fiber material and a matrix material, wherein the natural fiber material comprises two sets of unidirectional natural fibers provided in the form of fibrous yarns that are woven to a bi-axial woven fabric. This fabric is embedded within and impregnated with the matrix material.

In the part **400** shown in **Fig. 4****,** a bi-axial natural fiber material **410** using flax fibers is used in combination with a thermoset epoxy resin as matrix material.

At the bottom of **Fig. 4****,** a similar part **405** is shown after demolding (e.g., after step **270** of the method **200** or step **370** of the method **300**), but before being trimmed to its final dimensions, to make the woven structure of the included bi-axial flax-fiber material **410** more apparent.

Finally, **Figs. 5a****-h** show a luggage system, namely a travel- or cabin trolley **500,** making use of a fiber-reinforced material as disclosed herein, for example one of the materials **100a, 100b** or **100c** discussed above.

The trolley **500** generally consists of a front shell **510** and a back shell **520,** which are connected to each other in such a manner that the two shells **510, 520** can be opened and closed upon each other. The trolley **500** further comprises a closure means, in the embodiment shown here a zipper mechanism **530,** from securing the two shells **510, 520** in their closed position.

The trolley **500** further comprises four spinning wheels **540** mounted in respective indentations **545** at the four bottom corners of the front and back shells **510, 520.**

The trolley **500** also comprises a retractable handle-bar system **550** for pulling the trolley **500** along on its wheels, as well as a side grip arrangement **560** for carrying the trolley **500** by hand.

Beneath the handle-bar system **550,** a recess or storage space **570** may be arranged, which is accessible when the handle-bar system **550** is in its protracted position (see **Fig. 5d****),** and in which, for example, an USB powerbank may be releasable stored. Express reference is made at this position to the disclosure in the applicant's previous applications DE 20 2017 101 957 U1 and WO 2018 185016 A1, in regard to the handle-bar system **550** and storage space **570** of the trolley **500.**

**Fig. 5a** shows the front shell **510** without any of the additional components (wheels, handle-bar system, zipper, etc.), **Fig. 5b** shows the back shell **520** without any of the additional components. Either or both of these shells **510, 520** may be made in the inventive manner, i.e. using an embodiment of the disclosed fiber-reinforced material based on natural fibers, like the material **100a, 100b or 100c** discussed above. Preferable, both shells **510** and **520** are made from such a material.

**Fig. 5c** shows a front view of the entire trolley **500** with all of the further components added, and **Fig. 5d** a back view of the entire trolley **500,** in both cases with the handle-bar system **550** in protracted or pulled-out position.

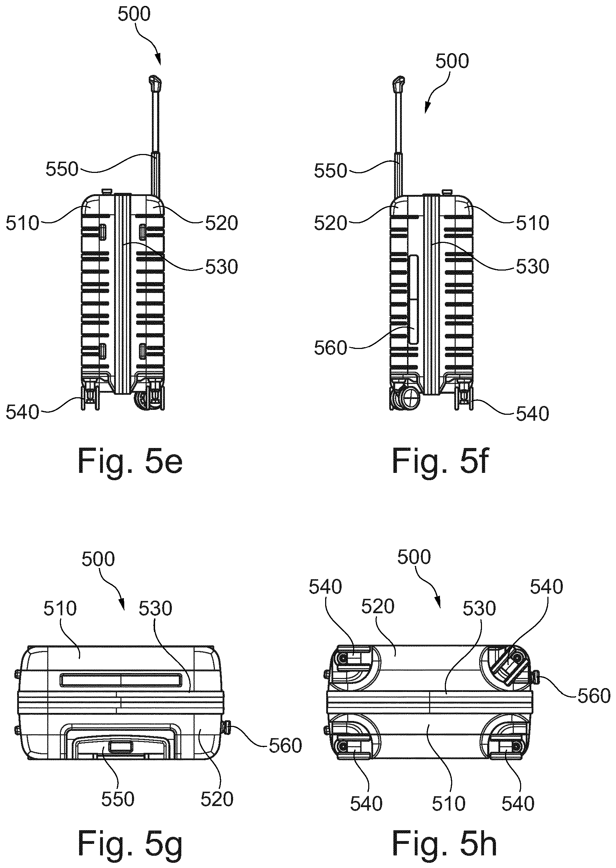

**Fig. 5e** shows the right-hand side face (in relation to the front face) of the trolley **500** with all of the further components added, and **Fig. 5f** the left-hand side face. Finally, **Fig. 5g** shows the top of the trolley with all of the further components added and with the handle-bar system **550** in its contracted or pushed-in position, and **Fig. 5h** shows a bottom view.

Besides the front and back shell **510** and **520,** any or all parts of the trolley **500** may comprise or be based on the disclosed fiber-reinforced material, or be made of such a material.

In this manner, the disclosed materials and methods may allow for the provision of a trolley **500** free from aluminum, or at least with a significantly reduced amount of aluminum, and completely or at least predominately based on natural and biodegradable materials. This lessens the environmental footprint left by the luggage system **500** both at the beginning and the end of its lifespan.

## Claims

1. Part (21; 31; 400) of a luggage system, in particular shell (510; 520) of a hard-shell case or trolley (500), comprising a fiber-reinforced material (100a; 100b; 100c), wherein the fiber-reinforced material comprises:
1a. a natural fiber material (110a; 110b; 110c); and
1b. a matrix material (130a; 130b; 130c),
1c. wherein the natural fiber material comprises n sets of unidirectional fibers which are embedded in and/or impregnated with the matrix material, wherein n is an integer number greater than 1, and wherein the n sets of unidirectional fibers are mutually non-parallel, and
1d. wherein the natural fiber material is provided as a layered fabric, wherein each layer comprises several plies of parallel-oriented, unidirectional fibers.

2. Part of a luggage system according to claim 1, wherein each set of unidirectional fibers comprises a plurality of fiber bundles and/or fibrous yarns that are arranged along a respective axis.

3. Part of a luggage system according to claim 1 or 2, wherein n = 2 and the natural fiber material is provided as a bi-axial fabric, wherein the two axes of the bi-axial fabric preferably intersect at an oblique angle.

4. Part of a luggage system according to claim 1 or 2, wherein n = 3 and the natural fiber material is provided as a tri-axial fabric, wherein at least two of the axes of the tri-axial fabric intersect preferably at an angle different from 60°.

5. Part of a luggage system according to one of claims 1 - 4, wherein the fibers are continuous.

6. Part of a luggage system according to one of claims 1 - 5, wherein the natural fiber material comprises fibers of one or more of the following materials: leaf fibers, bast fibers, or stalk fibers.

7. Part of a luggage system according to one of claims 1 - 6, wherein a material composition of the natural fiber material varies within a given set of unidirectional fibers and/or between at least two sets of unidirectional fibers.

8. Part of a luggage system according to one of claims 1 - 7, wherein one or more physical properties, in particular a gauge of the fibers and/or a linear mass density of the fibers, varies within a given set of unidirectional fibers and/or between at least two sets of unidirectional fibers, and/or
wherein the matrix material is biodegradable and/or comprises recycled material.

9. Part of a luggage system according to one of claims 1 - 8, wherein the matrix material comprises one of more of the following materials: an amorphic, crystalline or semicrystalline thermoset resin; an amorphic, crystalline or semicrystalline thermoplastic resin; or a film of any of the beforementioned thermoset of thermoplastic materials or combinations thereof, and/or wherein the part is free from aluminum.

10. Method (200; 300) for the manufacture of a part of a luggage system according to one of claims 1 - 9, the method comprising:
10a. providing a pre-form;
10b. heating the pre-form and transferring (240; 340) the pre-form to a mold (22; 32) having dimensions that correspond to the intended shape of the part;
10c. closing the mold (250; 350), preferably under the application of pressure, such that the pre-form adopts the intended shape of the part;
10d. curing (260; 360) the pre-form or allowing it to cure, preferably under the application of: heat, UV light and/or ultrasonic waves, and/or under a change in: temperature and/or humidity; and
10e. opening (270; 370) the mold and demolding the part.

11. Method according to claim 10, wherein providing the pre-form comprises the steps of:
11a. providing (310) two or more plies of unidirectional natural fibers; and
11b. layering up (320) the plies to form a stack of one or more layers of unidirectional fibers, the unidirectional fibers of each layer being arranged along a respective axis; wherein
11c. uncured matrix material is applied (330) to the plies of unidirectional fibers and/or to the layered stack and is allowed to be at least partially absorbed by the natural fibers to form the pre-form,
wherein providing the pre-form further preferably comprises fusing the locations where fibers of the different plies or layers cross or overlap within the stack under the application of: pressure, heat, UV light and/or ultrasonic waves, or providing the pre-form comprises the steps of:
11d. providing (210) at least one natural fiber material in the form of a woven multi-axial fabric;
11e. providing (210) at least one uncured matrix material in the form of a ribbon, sheet or film; and
11f. laminating (220) the natural fiber material with the uncured matrix material, preferably under the application of: heat and/or pressure, and allowing the natural fiber material to a least partially absorb the uncured matrix material to form the pre-form.

12. Method for the repair of a part of a luggage system according to one of claims 1 - 9 that has been damaged, the method comprising:
12a. adding uncured matrix material to the damaged area of the part;
12b. allowing the natural fiber material in the damaged area to absorb the added uncured matrix material at least partially; and
12c. curing the added uncured matrix material or allowing it to cure, preferably under the application of: pressure, heat, UV light and/or ultrasonic waves, and/or under a change in: temperature and/or humidity.

13. Method for the repair of a part of a luggage system according to claim 12, further comprising applying pressure to the damaged area.

## Patentansprüche

1. Teil (21; 31; 400) eines Gepäcksystems, insbesondere Schale (510; 520) eines Hartschalenkoffers oder Trolleys (500), umfassend ein faserverstärktes Material (100a; 100b; 100c), wobei das faserverstärkte Material umfasst:
1a. ein Naturfasermaterial (110a; 110b; 110c); und
1b. ein Matrixmaterial (130a; 130b; 130c),
1c. wobei das Naturfasermaterial n Sätze von unidirektionalen Fasern umfasst, die in das Matrixmaterial eingebettet und/oder mit diesem imprägniert sind, wobei n eine ganze Zahl größer als 1 ist und wobei die n Sätze von unidirektionalen Fasern zueinander nicht parallel sind, und
1d. wobei das Naturfasermaterial als geschichtetes Gewebe bereitgestellt wird, wobei jede Schicht mehrere Lagen parallel ausgerichteter, unidirektionaler Fasern umfasst.

2. Teil eines Gepäcksystems nach Anspruch 1, wobei jeder Satz unidirektionaler Fasern eine Vielzahl von Faserbündeln und/oder Fasergarnen umfasst, die entlang einer jeweiligen Achse angeordnet sind.

3. Teil eines Gepäcksystems nach Anspruch 1 oder 2, wobei n=2 ist und das Naturfasermaterial als biaxiales Gewebe bereitgestellt wird, wobei die zwei Achsen des biaxialen Gewebes sich vorzugsweise in einem schiefen Winkel schneiden.

4. Teil eines Gepäcksystems nach Anspruch 1 oder 2, wobei n=3 ist und das Naturfasermaterial als triaxiales Gewebe bereitgestellt wird, wobei sich mindestens zwei der Achsen des triaxialen Gewebes vorzugsweise in einem Winkel schneiden, der von 60° verschieden ist.

5. Teil eines Gepäcksystems nach einem der Ansprüche 1-4, wobei die Fasern kontinuierlich sind.

6. Teil eines Gepäcksystems nach einem der Ansprüche 1-5, wobei das Naturfasermaterial Fasern aus einem oder mehreren der folgenden Materialien umfasst: Blattfasern, Bastfasern oder Stängelfasern.

7. Teil eines Gepäcksystems nach einem der Ansprüche 1-6, wobei eine Materialzusammensetzung des Naturfasermaterials innerhalb eines gegebenen Satzes von unidirektionalen Fasern und/oder zwischen mindestens zwei Sätzen von unidirektionalen Fasern variiert.

8. Teil eines Gepäcksystems nach einem der Ansprüche 1-7, wobei eine oder mehrere physikalische Eigenschaften, insbesondere eine Stärke der Fasern und/oder eine lineare Massendichte der Fasern, innerhalb eines gegebenen Satzes von unidirektionalen Fasern und/oder zwischen mindestens zwei Sätzen von unidirektionalen Fasern variiert, und/oder wobei das Matrixmaterial biologisch abbaubar ist und/oder recyceltes Material umfasst.

9. Teil eines Gepäcksystems nach einem der Ansprüche 1-8, wobei das Matrixmaterial eines oder mehrere der folgenden Materialien umfasst: ein amorphes, kristallines oder teilkristallines duroplastisches Harz; ein amorphes, kristallines oder teilkristallines thermoplastisches Harz; oder einen Film aus einem der vorgenannten duroplastischen oder thermoplastischen Materialien oder Kombinationen davon, und/oder wobei das Teil frei von Aluminium ist.

10. Verfahren (200; 300) zur Herstellung eines Teils eines Gepäcksystems nach einem der Ansprüche 1-9, wobei das Verfahren umfasst:
10a. Bereitstellen eines Vorformlings;
10b. Erhitzen des Vorformlings und Überführen (240; 340) des Vorformlings in ein Formwerkzeug (22; 32), das Abmessungen aufweist, die der vorgesehenen Form des Teils entsprechen;
10c. Schließen des Formwerkzeugs (250; 350), vorzugsweise unter Anwendung von Druck, sodass der Vorformling die vorgesehene Form des Teils annimmt;
10d. Aushärten (260; 360) des Vorformlings oder Aushärtenlassen des Vorformlings, vorzugsweise unter Anwendung von: Wärme, UV-Licht und/oder Ultraschallwellen, und/oder unter einer Änderung von: Temperatur und/oder Feuchtigkeit; und
10e. Öffnen (270; 370) des Formwerkzeugs und Entformen des Teils.

11. Verfahren nach Anspruch 10, wobei das Bereitstellen des Vorformlings die Schritte umfasst:
11a. Bereitstellen (310) von zwei oder mehr Lagen unidirektionaler Naturfasern; und
11b. Aufschichten (320) der Lagen zu einem Stapel aus einer oder mehreren Schichten unidirektionaler Fasern, wobei die unidirektionalen Fasern jeder Schicht entlang einer jeweiligen Achse angeordnet sind; wobei
11c. unausgehärtetes Matrixmaterial auf die Lagen unidirektionaler Fasern und/oder auf den geschichteten Stapel aufgebracht (330) wird und zumindest teilweise von den Naturfasern absorbiert werden gelassen wird, um den Vorformling zu bilden, wobei das Bereitstellen des Vorformlings ferner vorzugsweise ein Verschmelzen der Stellen umfasst, an denen sich Fasern der verschiedenen Lagen oder Schichten innerhalb des Stapels kreuzen oder überlappen, unter Anwendung von: Druck, Wärme, UV-Licht und/oder Ultraschallwellen, oder wobei das Bereitstellen des Vorformlings die Schritte umfasst:
11d. Bereitstellen (210) mindestens eines Naturfasermaterials in Form eines gewebten multiaxialen Gewebes;
11e. Bereitstellen (210) mindestens eines unausgehärteten Matrixmaterials in Form eines Bandes, einer Bahn oder einer Folie; und
11f. Laminieren (220) des Naturfasermaterials mit dem unausgehärteten Matrixmaterial, vorzugsweise unter Anwendung von: Wärme und/oder Druck, und Absorbierenlassen des unausgehärteten Matrixmaterials zumindest teilweise durch das Naturfasermaterial, um den Vorformling zu bilden.

12. Verfahren zur Reparatur eines Teils eines Gepäcksystems nach einem der Ansprüche 1-9, das beschädigt wurde, wobei das Verfahren umfasst:
12a. Hinzufügen von unausgehärtetem Matrixmaterial zum beschädigten Bereich des Teils;
12b. Absorbierenlassen des hinzugefügten unausgehärteten Matrixmaterials zumindest teilweise durch das Naturfasermaterial im beschädigten Bereich; und
12c. Aushärten des hinzugefügten unausgehärteten Matrixmaterials oder Aushärtenlassen desselben, vorzugsweise unter Anwendung von: Druck, Wärme, UV-Licht und/oder Ultraschallwellen, und/oder unter einer Änderung von: Temperatur und/oder Feuchtigkeit.

13. Verfahren zur Reparatur eines Teils eines Gepäcksystems nach Anspruch 12, ferner umfassend das Ausüben von Druck auf den beschädigten Bereich.

## Revendications

1. Pièce (21 ; 31 ; 400) d'un système de bagage, en particulier coque (510 ; 520) d'une valise rigide ou d'un chariot (500), comprenant un matériau renforcé par des fibres (100a ; 100b ; 100c), dans laquelle le matériau renforcé par des fibres comprend :
1a. un matériau en fibre naturelle (110a ; 110b ; 110c) ; et
1b. un matériau de matrice (130a ; 130b ; 130c),
1c. dans laquelle le matériau en fibre naturelle comprend n ensembles de fibres unidirectionnelles qui sont noyées dans, et/ou imprégnées avec, le matériau de matrice, n étant un nombre entier supérieur à 1, et les n ensembles de fibres unidirectionnelles étant mutuellement non parallèles, et
1d. dans laquelle le matériau en fibre naturelle est obtenu sous forme d'un textile en couches, chaque couche comprenant plusieurs épaisseurs de fibres unidirectionnelles orientées parallèlement.

2. Pièce d'un système de bagage selon la revendication 1, dans laquelle chaque ensemble de fibres unidirectionnelles comprend une pluralité de paquets de fibres et/ou de fils fibreux qui sont agencés le long d'un axe respectif.

3. Pièce d'un système de bagage selon la revendication 1 ou 2, dans laquelle n = 2 et le matériau en fibre naturelle est obtenu sous forme d'un textile biaxial, les deux axes du textile biaxial formant de préférence une intersection sous un angle oblique.

4. Pièce d'un système de bagage selon la revendication 1 ou 2, dans laquelle n = 3 et le matériau en fibre naturelle est obtenu sous forme d'un textile triaxial, au moins deux des axes du textile triaxial formant une intersection de préférence sous un angle différent de 60°.

5. Pièce d'un système de bagage selon l'une des revendications 1 à 4, dans laquelle les fibres sont continues.

6. Pièce d'un système de bagage selon l'une des revendications 1 à 5, dans laquelle le matériau en fibre naturelle comprend des fibres d'un ou plusieurs des matériaux suivants : fibres de feuilles, fibres libériennes, ou fibres de tiges.

7. Pièce d'un système de bagage selon l'une des revendications 1 à 6, dans laquelle une composition de matériau du matériau en fibre naturelle varie au sein d'un ensemble donné de fibres unidirectionnelles et/ou entre au moins deux ensembles de fibres unidirectionnelles.

8. Pièce d'un système de bagage selon l'une des revendications 1 à 7, dans laquelle une ou plusieurs propriétés physiques, en particulier un calibre des fibres et/ou une densité linéaire massique des fibres, varient au sein d'un ensemble donné de fibres unidirectionnelles et/ou entre au moins deux ensembles de fibres unidirectionnelles, et/ou dans laquelle le matériau de matrice est biodégradable et/ou comprend un matériau recyclé.

9. Pièce d'un système de bagage selon l'une des revendications 1 à 8, dans laquelle le matériau de matrice comprend un ou plusieurs des matériaux suivants : une résine thermodurcie amorphe, cristalline ou semi-cristalline ; une résine thermoplastique amorphe, cristalline ou semi-cristalline ; ou un film de l'un des matériaux thermodurcis ou thermoplastiques précités ou de leur combinaison, et/ou dans laquelle la pièce est dépourvue d'aluminium.

10. Procédé (200 ; 300) pour la fabrication d'une pièce d'un système de bagage selon l'une des revendications 1 à 9, le procédé comprenant :
10a. l'obtention d'une préforme ;
10b. le chauffage de la préforme et le transfert (240 ; 340) de la préforme vers un moule (22 ; 32) ayant des dimensions qui correspondent à la forme souhaitée de la pièce ;
10c. la fermeture du moule (250 ; 350), de préférence sous l'application de pression, de sorte que la préforme adopte la forme souhaitée de la pièce ;
10d. le durcissement (260 ; 360) de la préforme ou la laisser se durcir, de préférence sous l'application de : chaleur, lumière UV et/ou ondes ultrasonores, et/ou sous un changement de : température et/ou humidité ; et
10e. l'ouverture (270 ; 370) du moule et le démoulage de la pièce.

11. Procédé selon la revendication 10, dans lequel l'obtention de la préforme comprend les étapes suivantes :
11a. l'obtention (310) de deux ou plus épaisseurs de fibres naturelles unidirectionnelles ; et
11b. la superposition (320) des épaisseurs pour former un empilement d'une ou plusieurs couches de fibres unidirectionnelles, les fibres unidirectionnelles de chaque couche étant agencées le long d'un axe respectif ; dans lequel
11c. un matériau de matrice non durci est appliqué (330) aux épaisseurs de fibres unidirectionnelles et/ou à l'empilement en couches, et on le laisse être au moins partiellement absorbé par les fibres naturelles pour former la préforme,
dans lequel l'obtention de la préforme comprend en outre de préférence la fusion des emplacements où les fibres des différentes épaisseurs ou couches se croisent ou se recouvrent au sein de l'empilement, sous l'application de : pression, chaleur, lumière UV et/ou ondes ultrasonores,
ou l'obtention de la préforme comprend les étapes suivantes :
11d. l'obtention (210) d'au moins un matériau en fibre naturelle sous forme d'un textile multiaxial tissé ;
11e. l'obtention (210) d'au moins un matériau de matrice non durci sous forme d'un ruban, d'une feuille ou d'un film ; et
11f. la stratification (220) du matériau en fibre naturelle avec le matériau de matrice non durci, de préférence sous l'application de : chaleur et/ou pression, et on laisse le matériau en fibre naturelle être au moins partiellement absorbé par le matériau de matrice non durci pour former la préforme.

12. Procédé de réparation d'une pièce d'un système de bagage selon l'une des revendications 1 à 9 qui a été endommagée, le procédé comprenant :
12a. l'ajout de matériau en matrice non durci à la zone endommagée de la pièce ;
12b. laisser le matériau en fibre naturelle dans la zone endommagée absorber au moins partiellement le matériau en matrice non durci ajouté ; et
12c. le durcissement du matériau en matrice non durci ajouté ou lui laisser la possibilité de durcir, de préférence sous l'application de : pression, chaleur, lumière UV et/ou ondes ultrasonores, et/ou sous un changement de : température et/ou humidité.

13. Procédé de réparation d'une pièce d'un système de bagage selon la revendication 12, comprenant en outre l'application d'une pression à la zone endommagée.
